# EUROPÄISCHE PATENTSCHRIFT

(11) **EP 3 304 158 B1**
(45) Veröffentlichungstag und Bekanntmachung des Hinweises auf die Patenterteilung: **04.08.2021**
(21) Anmeldenummer: 16732957.2
(22) Anmeldetag: 07.06.2016
(51) Int. Cl.: G02B 6/44

(54) **SPLEISSMODUL MIT INTEGRIERTER HANDHABUNG VON ÜBERLÄNGEN UND BAUGRUPPE MIT DIESEN SPLEISSMODULEN**
SPLICE MODULE WITH INTEGRATED OVERLENGTH MANAGEMENT AND ASSEMBLY COMPRISING SUCH SPLICE MODULES
MODULE D'ÉPISSURE À STOCKAGE INTÉGRÉ DES LONGUEURS EXCÉDENTAIRES ET BLOC COMPRENANT TELS MODULES

(30) Priorität: 08.06.2015 DE 202015102951 U
(43) Veröffentlichungstag der Anmeldung: 11.04.2018
(73) Patentinhaber: trans data elektronik Gmbh, 49626 Bippen (DE)
(72) Erfinder: ENGEL, Andreas, 44135 Dortmund (DE)
(74) Vertreter: Fitzner, Uwe
(86) Internationale Anmeldenummer: PCT/EP2016/062833
(87) Internationale Veröffentlichungsnummer: WO 2016/198371

(56) Entgegenhaltungen:
- WO-A1-2014/077792
- DE-U1-202005 009 182
- US-A- 5 071 211
- US-A- 5 247 603

## Beschreibung

Die vorliegende Erfindung betrifft eine Baugruppe mit Spleißmodulen, wobei die Spleißmodule eine integrierte Handhabung der Überlängen aufweisen, d.h. ein integriertes Überlängenmanagement.

Ein Optical Distribution Frame (ODF) ist ein Rangierfeld für Lichtwellenleiter (LWL). Das Einsatzgebiet ist in der Telekommunikation wie z. B. in Rechenzentren, wo verschiedene Signalquellen intern oder extern miteinander verbunden werden oder LWL-Kabel mit mehreren Fasern in die einzelnen Fasern zwecks Verteilung aufgespalten werden. Ein ODF ist ein passiver optischer Signalverteiler bzw. Signalknotenpunkt.

Die Verkabelung kann bei einem Einsatz von kurzen Leitungswegen mit fertig konfektionierten LWL-Kabeln oder mit einer Spleißbox erfolgen. Bei Einsatz einer Spleißbox werden Pigtails verwendet. Pigtails sind kurze Einzelfasern mit einer Länge von ca. 1,5m bis 2,5m, die einseitig einen vorkonfektionierten LWL-Steckverbinder besitzen. Das offene Faserende der Pigtails wird mit einem speziellen Lichtbogenspleißgerät an die Fasern eines Verlegekabels gespleißt. Alternativ werden die Fasern der Verlegekabel ohne die Verwendung von Pigtails direkt zusammengespleißt.

Spleißen ist eine spezielle Art der Verbindung zweier Adern oder zweier Glasfasern in der Fernmeldetechnik. Glasfasern (Lichtwellenleiter) werden mit einem speziellen Lichtbogenspleißgerät gespleißt, wobei Verlegekabel an ihren Enden mit jeweiligen Pigtails verbunden werden.

Beim Aufbau von Lichtwellenleiterkabel-Netzwerken werden Verteilerschränke für die Gewährleistung einer strukturierten Verkabelung benötigt. Spleißmodule sind Untereinheiten von Verteilerschränken und dienen der Verteilung von Lichtwellenleitern. Überlängen sind zur schonenden Handhabung der Lichtwellenleiter erforderlich und werden nach dem Stand der Technik in Baugruppenträgern in sogenannten Überlängenschubladen abgelegt. In herkömmlichen 19" (482,6 mm) Spleißboxen wird die Überlänge in der gleichen Box untergebracht wie die Spleißkassetten. Eine Anforderung, die an Lichtwellenleiter-Verteilerschränke gestellt wird, ist eine maximale Bestückung derselben bei hoher Packungsdichte und gleichzeitiger geringfügiger mechanischer Beanspruchung der Lichtwellenleiter.

Systeme mit Spleißadern sind z. B. In der DE 20115940U1, DE 102010007783 A1, DE 202005009182U1 und der EP 2383594 A1 beschrieben. Das Dokument US5071211 offenbart einen planaren Steckerhalter für optische Fasern mit Speicherfächern für ankommende Fasern und einem Befestigungsbereich für Stecker an abgehenden Fasern. Zwei Speicherfächer liegen Rücken an Rücken auf jeder Seite einer ebenen Basis des Halters, wobei die Fächer miteinander verbunden sind, damit die Fasern von Fach zu Fach gelangen können. Der Montagebereich und die Speicherfächer sind von Ende zu Ende des Halters ausgerichtet. Bei im Montagebereich montierten Steckerhalterungen liegen die Halterungen in gemeinsamen Ebenen mit den beiden Speicherfächern in einer Tiefenrichtung des Halters. Ebenfalls enthalten ist eine Verteilerrahmen-Halter-Kombination, bei der die Halter in zwei Bänken montiert sind, wobei sich die Patchkabel zwischen den Bänken und selektiv zwischen den Steckern erstrecken.

Die aus dem Stand der Technik bekannten Baugruppenträger benötigten eine 4. Höheneinheit für die Überlängen des Verlegekabels (allgemein bezeichnet als "Überlängenfach"). Das Überfängenfach besitzt 1 HE (Höheneinheiten) und dient zur Aufteilung und Zugabfangung von hochfaserigen Bündeladerkabel. Das Überlängenfach wird benötigt, um die Spleißmodule aus den Baugruppenträgern entnehmen zu können, da die Fasern nur auf diese Weise außerhalb des Baugruppenträgers gespleißt werden können.

Die Telekommunikation mit Ihren ständig steigenden Datenübertragungsraten und Datenvolumina macht einen permanent fortschreitenden Netzausbau und immer größere Rechenzentren mit immer umfangreicheren Glasfaserverbindungen erforderlich. Dies geht auch mit einem gesteigerten Platzbedarf für die erforderliche LWL Verteilertechnik einher. Es besteht daher der Bedarf, eine höhere Packungsdichte zu erreichen um vorhandene Flächen optimaler auszunutzen.

Aufgabe der vorliegenden Erfindung war es, die Nachteile des Standes der Technik, insbesondere durch Verbesserung des Platzbedarfs und Verbesserung der Handhabung im Umgang mit Baugruppenträgern und Spleißmodulen, zu überwinden.

Diese Aufgabe wird erfindungsgemäß gelöst durch die Bereitstellung eines Spleißmoduls gemäß Anspruch 1.

Ferner wird die Aufgabe gelöst durch die Bereitstellung eines Baugruppenträgers mit der Breite 19 Zoll (482,6 mm) mit 3 Höheneinheiten geeignet zur Aufnahme von 1, 2, 3, 4, 5, 6, 7, 8, 9, 10, 11, 12, 13, 14, 15, 16 oder 17 Spleißmodulen mit integriertem Überlängenmanagement zur Aufnahme eines Schlauchs. Die bevorzugte Anzahl der Spleißmodule ist 12 (3HE/7TE; HE = Höheneinheiten; TE = Teileinheiten).

Die Erfindung zeichnet sich durch folgende Merkmale aus:
1. Unterbringung der Bündelader in einem Flexschlauch, der durch seinen Aufbau als Schutzschlauch und gleichzeitig als Biegeradienbegrenzer fungiert. Außerdem ermöglicht der Flexschlauch eine kontrollierte Führung der geschützten Bündelader in dem dafür vorgesehenen Überlängenspeicher, so dass das Modul problemlos ohne eine Schädigung (Einklemmen) der Bündelader entnommen bzw. eingesetzt werden kann.
2. Es erfolgt eine Belegung im Baugruppenträger mit 7TE pro Modul. Dadurch können 12 Module mit jeweils 24 Fasern (Spleiße) pro Baugruppenträger unterbringen. Das sind in Summe 288 Fasern (Spleiße) auf 3HE. Der Schutzschlauch ist so bemessen, dass 2 Bündeladern mit jeweils 12 Fasern aufgenommen werden können.
3. Bei erfindungsgemäßer Lösung ist ein durchgängig optimal geschütztes Handling der Bündelader hinter den Modulen gewährleistet. Es werden die Flexschläuche mit den Bündeladern definiert geordnet und gleichzeitig fixiert auf der Rückseite des Baugruppenträgers weg zum Stammkabel Aufteiler geführt. Das ist bei den Produkten im Stand der Technik nicht vergleichbar gelöst worden. Auf der Rückseite befinden sich übereinander angeordnete Halteösen, so dass die Schutzschläuche der einzelnen Module jeweils zur Seite geordnet weggeführt werden. Die Befestigung in den Halteösen erfolgt durch Reindrücken. Die Rückseite mit den Halteösen wird auch Backplane genannt.

Die nachfolgend beschriebene Baugruppe umfasst einen 19" (482,6 mm) Baugruppenträger, welcher 3 HE besitzt und mit bis zu 12x Spleißmodulen (3HE/7TE) oder mit bis zu 17 Spleißmodulen (3/HE/5TE) bestückt werden kann, wobei die Spleißmodule geeignet sind zur Aufnahme der Überlänge eines Schlauchs. In dem erfindungsgemäßen Baugruppenträger wird die vierte Höheneinheit für das Überlängenfach eingespart, da die Überlänge der Bündelader in einem Schlauch im Spleißmodul abgelegt wird.

In einer weiteren Ausführungsform umfasst der Baugruppenträger 6HE und umfasst die doppelte Anzahl Spleißmodule oder Spleißmodule mit der doppelten Höhe, so dass sich die Anzahl der Spleiße und der Ports verdoppelt.

Ein besonderer Vorteil des erfindungsgemäßen Baugruppenträgers ist, dass die Überlängen des Verlegekabels in bisher nicht bekannter Weise gemanagt, gehandhabt bzw. geführt werden (Überlängenmanagement). Der Baugruppenträger benötigt daher kein Überlängenfach. Das Spleißmodul besitzt somit drei Layer (d.h. Ebenen oder Schichten). Ein Layer für die Spleißkassette, ein zweiter Layer für die Überlänge der Pigtails und der dritte Layer als Speicher für die Überlänge des zugeführten Schlauchs. Für einen zusätzlichen Schutz werden die Röhrchen in einem Schlauch aus Kunststoff oder Metall mit integriertem Biegeradienbegrenzer eingefädelt. Die Überlänge des Schlauchs findet im Überlängenspeicher des Moduls Platz.

Der Lichtwellenleiter bzw. die Bündelader wird in einem Schutzschlauch geführt. Die Begriffe Schlauch/Schläuche, Lichtwellenleiter, Bündelader, Schutzschlauch, Miniflex®- Schlauch (beispielsweise der Firma m2fx, Miniflex®), Miniflex®-Schutzschlauch, Verlegekabel, Kabel, Röhrchen und/oder Glasfaserkabel werden daher im Sinne der Erfindung synonym verwendet. Miniflex® Standard Glasfaserkabel sind flexible faseroptische Schläuche hergestellt aus einem strapazierfähigen Polymer. Verlegekabel sind im Regelfall Bündeladerkabel (Loose Tube Cable). In diesen Kabeln sind in der Regel Röhrchen mit 12 bis 24 Fasern untergebracht. Die Gesamtkonstruktion kann sehr viele Röhrchen besitzen. Je nach Anwendung für Außen- oder Innenverlegung gibt es besondere Konstruktionen und Mantelmaterialien zum Schutz der Fasern.

Der Schlauch ist daher im Sinne der Erfindung ein Schutzschlauch mit innenliegenden Fasern. Ferner sind die im Sinne der Erfindung verwendeten Schläuche bevorzugt elastisch und besitzen einen definierten Biegeradius. Die verwendeten Schläuche biegen sich wenn Druck bzw. Kraft auf den Schlauch ausgeübt wird und haben die Tendenz sich automatisch gerade auszulegen, sobald der Druck bzw. die Kraft nachlässt und sich der Schlauch entspannt. Wenn das Spleißmodul aus dem Baugruppenträger nach vorne entnommen wird, wird die Überlänge des Schlauchs (Kabels) aus dem Überlängenspeicher entnommen, d.h. herausgezogen. Der Schlauch (das Kabel) entspannt sich automatisch beim Herausziehen. Im vollständig ausgezogenen Zustand, d.h. bei maximal ausgezogener Überlänge, ist der Schlauch vollständig entspannt. Wird das Spleißmodul wieder in den Baugruppenträger eingesetzt, wird die Überlänge wieder in den Überlängenspeicher aufgenommen.

Ein weiterer Vorteil des erfindungsgemäßen Baugruppenträgers und der erfindungsgemäßen Spleißmodule ist, dass die Spleißmodule durch die im Überlängenspeicher untergebrachte Überlänge des Schlauchs (Miniflex®-Schlauch, Verlegekabel und/oder Glasfaserkabel) einfach nach vorne herausnehmbar sind: Während des Herausziehens des Spleißmoduls aus dem Baugruppenträger wird der Schlauch aus dem Überlängenspeicher des Spleißmoduls abgewickelt bzw. abgerollt. Auf diese Art und Weise sind Fasern besser geschützt und das Spleißmodul kann vollständig entnommen werden. Es kann so extern ein Fusionsspleiß durchgeführt werden (mit der Fusions-Spleißtechnik wird eine feste Verbindung von zwei Lichtwellenleitern hergestellt; generell werden bei diesem Verfahren zwei Faserenden mittels eines Lichtbogens miteinander verschweißt).

In einer Variante ist der Schlauch (Miniflex®-Schlauch) mit der Spleißkassette verbunden. In einer anderen Variante ist der Schlauch mit dem Pigtailaderspeicher (Pigtailader-Überlängenspeicher) verbunden.

Die Schutzschläuche der 1, 2, 3, 4, 5, 6, 7, 8, 9, 10, 11, 12, 13, 14, 15, 16 oder 17 Spleißmodule mit integriertem Überlängenmanagement werden an der Rückseite des Baugruppenträgers geordnet zur Seite weggeführt. Der Baugruppenträger besitzt hierfür eine Führung oder eine Aufnahme für den Schlauch bzw. die Schläuche.

Die Besonderheit besteht darin, dass die Spleißmodule unabhängig voneinander entnommen werden können und sich die Schläuche untereinander nicht blockieren. Die Befestigung der am Baugruppenträger rückseitig geführten Schläuche kann auf unterschiedliche Art und Weise erfolgen. Im Dargestellten werden die Schläuche unverlierbar in die speziellen Aufnahmen aus Metall gedrückt. Die Schläuche enden dann außerhalb des Baugruppenträgers am Verlegekabel. Bevorzugt enden die Schläuche in einer Aufteileinheit. Diese Aufteileinheit ermöglicht einen sicheren geschützten Übergang von dem Verlegekabel auf die einzelnen Miniflex®-Schläuche.

Es handelt sich um ein Gehäuse, welches vorzugsweise geschlossen ist. Auf einer Seite wird das Verlegekabel eingeführt und mittels Kabelschelle zugentlastet befestigt. Der Kabelmantel ist zuvor in einer definierten Länge abgesetzt worden, so dass die Bündeladern mit ihren Röhrchen zu Tage treten. Diese Röhrchen werden dann in der Aufteileinheit in die Miniflex®-Schläuche überführt. Auf der anderen Seite der Aufteileinheit werden die Miniflex®-Schläuche herausgeführt; die einzelnen Miniflex®-Schläuche enthalten die aufgeteilten Bündel. Die Miniflex®-Schläuche werden hier auf dieselbe Art und Weise befestigt wie rückseitig am Baugruppenträger. Die Aufteileinheit wird im Rückraum oder seitlich auf der Höhe des dazugehörigen Baugruppenträgers im Verteilerschrank bzw. ODF-Gestell befestigt. Die Aufteileinheit kann aber auch zentral unten oder oben im Verteilerschrank bzw. ODF platziert werden. Vorteilhaft ist eine nahe Befestigung zum Baugruppenträger, um die Länge der Miniflex®-Schläuche so kurz wie möglich zu halten, da ein Einfädeln der Bündeladerröhrchen mit zunehmender Länge schwieriger wird und zusätzliche Zeit beansprucht. Die Zuführung des Verlegekabels kann von oben, unten, rechts oder links erfolgen.

Die Überlänge des Schlauches wird in dem Spleißmodul in beliebiger Weise und/oder im geordnetem Zustand abgelegt. Im "geordneten Zustand" abgelegt bedeutet, dass die Überlänge gebogen, gerollt oder gekrümmt abgelegt wird. Gemäß der Erfindung wird die Überlänge in einem Überlängenspeicher des Spleißmoduls abgelegt. Unter dem Begriff "abgelegt" wird im Sinne der vorliegenden Erfindung verstanden, dass die Überlänge in dem Spleißmodul untergebracht wird, d.h. dass die Überlänge im Spleißmodul bzw. im Überlängenspeicher den erforderlichen Platz findet. Vorzugsweise wird der Schlauch ohne Hilfsmittel abgelegt. In einer weiteren Variante können ein Aufrolihilfsmittel für den Schlauch wie eine Führungsrolle, eine Führungsschiene, eine Führungsnut, ein Stützsteg oder ein Federmechanismus vorhanden sein.

Der geringere Raumbedarf stellt einen Vorteil dar, da mehr Teilnehmer bei gleichem Platz- und Raumbedarf vernetzt werden können, als dies bislang möglich war.

Baugruppenträger sind offene Gehäuse aus Metall, welche für die Aufnahme von Leiterkarten (z. B. Europakarten) und Baugruppen verwendet werden. Die üblichen Baugruppenträger entsprechen der 19"-Bauweise. Baugruppenträger werden für industrielle, wissenschaftliche und kommerzielle Anwendungen eingesetzt. Sie ermöglichen die Aufnahme, Versorgung und Verbindung der gesteckten Baugruppen. Die Außenbreite eines Baugruppenträgers beträgt 19" = 482,6 mm. Die Höhe eines Baugruppenträger wird in Höheneinheiten (HE) angegeben, wobei 1 HE = 44,45 mm entspricht. Die Tiefe eines Baugruppenträger richtet sich nach der Tiefe der zu verwendenden Baugruppen.

Der erfindungsgemäße Baugruppenträger hat eine Tiefe von 200 mm bis 500 mm, eine Breite von 250 mm bis 600 mm und eine Höhe von 90 mm bis 2200 mm.

Die Tiefe des erfindungsgemäßen Baugruppenträgers beträgt besonders bevorzugt weniger als 280 mm. Bevorzugt ist auch eine Tiefe von 260 mm bis 280 mm. Besonders bevorzugt ist auch eine Tiefe von ca. 279 mm. Höchst besonders bevorzugt ist auch eine Tiefe von insgesamt 278,5 mm (vorderer Teil des Baugruppenträgers mit 182 mm und hinterer Teil des Baugruppenträgers mit 96,5 mm).

Das erfindungsgemäße Spleißmodul hat eine Tiefe von 100 mm bis 500 mm, eine Breite von 90 mm bis 400 mm und eine Höhe von 20 mm bis 100 mm (vorne oder hinten).

Die Tiefe des erfindungsgemäßen Spleißmoduls beträgt besonders bevorzugt weniger als 250 mm. Bevorzugt ist auch eine Tiefe von 230-250 mm. Besonders bevorzugt ist auch eine Tiefe von ca. 240 mm. Höchst besonders bevorzugt ist eine Tiefe von 240,5 mm. Die Höhe des Spleißmoduls beträgt bevorzugt weniger als 40 mm. Bevorzugt ist eine Höhe von 30-40 mm. Besonders bevorzugt ist auch eine Höhe von ca. 35 mm (Vorderseite) oder ca. 32 mm (Rückseite). Höchst besonders bevorzugt ist eine Höhe von 35,26 mm (Vorderseite) oder 31,5 mm (Rückseite). Die Breite des erfindungsgemäßen Spleißmoduls beträgt bevorzugt weniger als 130 mm. Bevorzugt ist auch eine Breite von 120-130 mm. Besonders bevorzugt ist auch eine Breite von ca. 129 mm. Höchst bevorzugt ist eine Breite von 128,9 mm.

In dem zuvor beschriebenen Spleißmodul können bis zu 24x Spleiße abgelegt werden und das gleichzeitig mit dem Abschluss auf 24x LC Kupplungen. Ein Spleißmodul kann bis zu 24x Pigtails aufnehmen. Die Pigtails besitzen vorzugsweise einseitig einen Multimode oder Singlemode LC Stecker mit PC oder APC Schliff (Steckerbuchsen). Die offenen Enden werden mittels Fusionsspleiß an die Fasern eines zuvor verlegten Stammkabels angespleißt. Die LC Stecker der Pigtails werden rückseitig in LC Kupplungen gesteckt. Die LC Kupplungen sind in einer Teilfrontplatte mit den Abmessungen 3HE/7TE bestückt. Die LC Kupplungen bilden damit den sogenannten Abschluss.

Im folgenden wird der Gegenstand der Erfindung unter Bezugnahme auf die Figuren beispielhaft näher erläutert.

Im Rahmen der vorliegenden Erfindung schließt die Formulierung "und/oder" sowohl jede beliebige als auch alle Kombinationen der in der jeweiligen Auflistung genannten Elemente ein. Die Erfindung ist vorstehend anhand einiger Ausführungsformen beschrieben; sie ist aber nicht auf diese Ausführungsformen beschränkt. Wesentlich ist, dass die erfindungsgemäßen Spleißmodule durch die Aufnahme der Überlänge des Schlauchs die Verwendung eines Baugruppenträger ermöglichen, der eine Höheneinheit einspart da kein Überlängenspeicher benötigt wird.

### Bezugszeichenliste zu den Figuren

- 1 -: Spleißmodul
- 2 -: Spleißkassette
- 3a -: Überlängenspeicher
- 3b -: Pigtailader-Überlängenspeicher
- 4a -: Schlauch in Richtung Spleißkassette oder Pigtailaderspeicher
- 4b -: Schlauch aus dem Überlängenspeicher
- 5a -: Steckerbuchsen des Spleißmoduls (Außenseite)
- 5b -: Steckerbuchsen des Spleißmoduls (Innenseite)
- 6 -: Schlauch im Überlängenspeicher (Überlänge)
- 7 -: Höhe des Spleißmoduls (Rückseite)
- 8 -: Breite des Spleißmoduls
- 9 -: Höhe des Spleißmoduls (Vorderseite)
- 10 -: Tiefe des Spleißmoduls
- 11 -: Gesamttiefe des Baugruppenträgers
- 12 -: Tiefe des Baugruppenträgers (hinterer Teil)
- 13 -: Tiefe des Baugruppenträgers (vorderer Teil)
- 14 -: Baugruppenträger
- 15 -: Führung oder Aufnahme des Baugruppenträger für Schlauch
- 16 -: Aufteileinheit
- 17 -: Kabelschelle
- 18 -: Verlegekabel
- 19 -: Miniflex®-Schläuche

### Figurenliste

Im folgenden wird der Gegenstand der Erfindung unter Bezugnahme auf die Figuren näher erläutert.

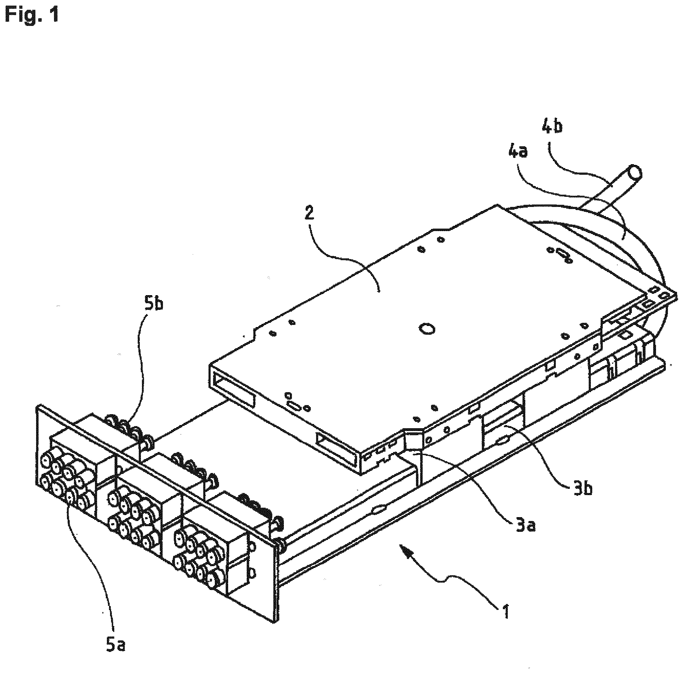

In Figur 1 wird ein Spleißmodul 1 mit Spleißkassette 2 gezeigt. Der Überlängenspeicher 3a für die Überlängen der Schläuche 4a bzw. 4b befindet sich auf der Unterseite des Spleißmoduls 1. Steckerbuchsen 5a und 5b dienen zur Verkabelung mit Lichtwellenleitern. Der Pigtailader-Überlängenspeicher 3b dient zur Aufnahme der Überlängen der Pigtailadern.

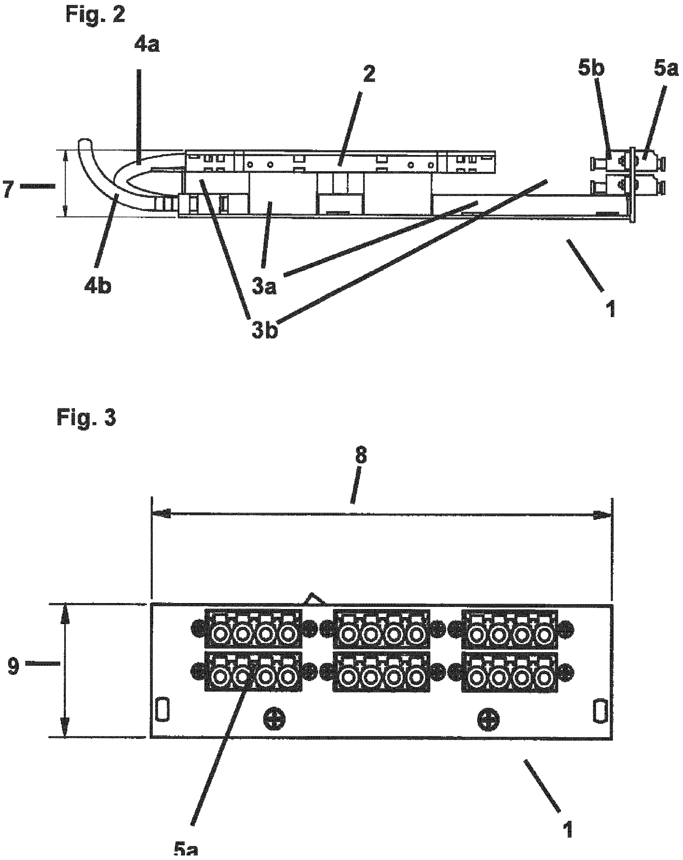

In der Figur 2 ist die Seitenansicht des Spleißmoduls 1 mit dem Überlängenspeicher 3a und der Spleißkassette 2 gezeigt. Der Überlängenspeicher 3a nimmt die Überlängen der Schläuche 4a bzw. 4b auf. Der Pigtailader-Überlängenspeicher 3b dient zur Aufnahme der Überlängen der Pigtailadern. Die Höhe 7 des Spleißmoduls beträgt 31,5 mm. Steckerbuchsen 5a und 5b dienen zur Verkabelung mit Lichtwellenleitern. Der Schlauch (Miniflex®-Schlauch 4a) ist mit der Spleißkassette 2 verbunden 4a.

In der Figur 3 ist die Frontansicht des Spleißmoduls 1 mit Spleißkassette 2 gezeigt. Die Höhe 9 des Spleißmoduls 1 beträgt 35,26 mm. Die Breite 8 des Spleißmoduls 1 beträgt 128,9 mm.

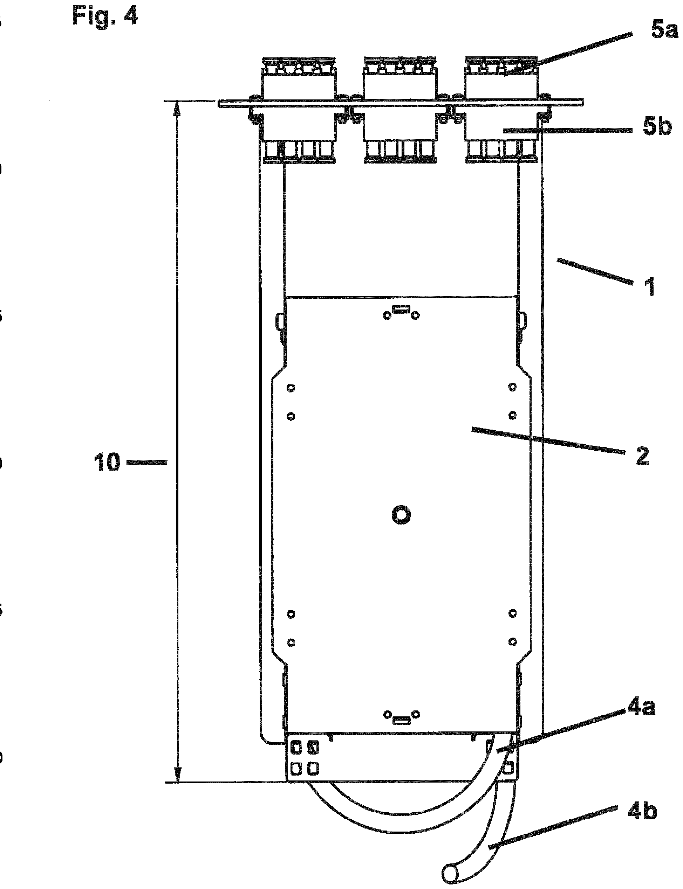

In der Figur 4 ist die Aufsicht auf das Spleißmoduls 1 mit Überlängenspeicher und Spleißkassette 2 mit dem geführten Schutzschlauch 4a bzw. 4b gezeigt. Die Tiefe 10 beträgt 240,5 mm.

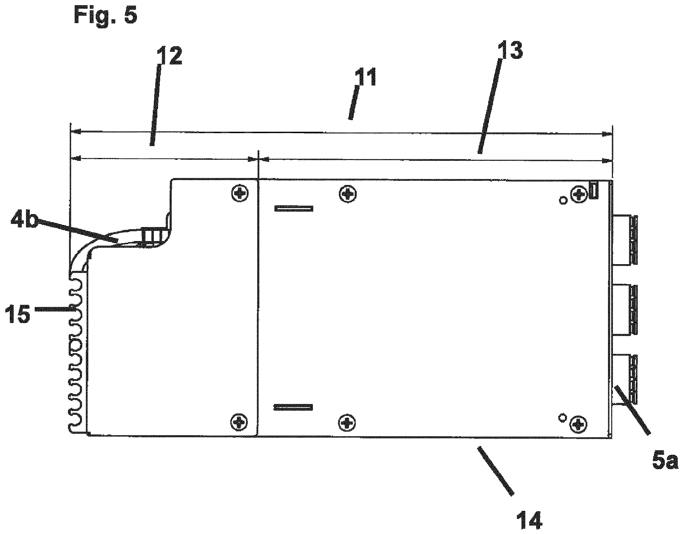

In der Figur 5 ist die Seitenansicht des Baugruppenträgers 14 gezeigt mit Aufnahmen der Schläuche zur Fixierung geordneten Wegführung zur Seite 15. Die Befestigung der am Baugruppenträger rückseitig geführten Schläuche 4b erfolgt im Dargestellten durch Drücken der Schläuche in Aufnahmen 15 aus Metall. Die Tiefe 11 beträgt insgesamt 278,5 mm (vorderer Teil des Baugruppenträgers 13 mit 182 mm und hinterer Teil des Baugruppenträgers 12 mit 96,5 mm).

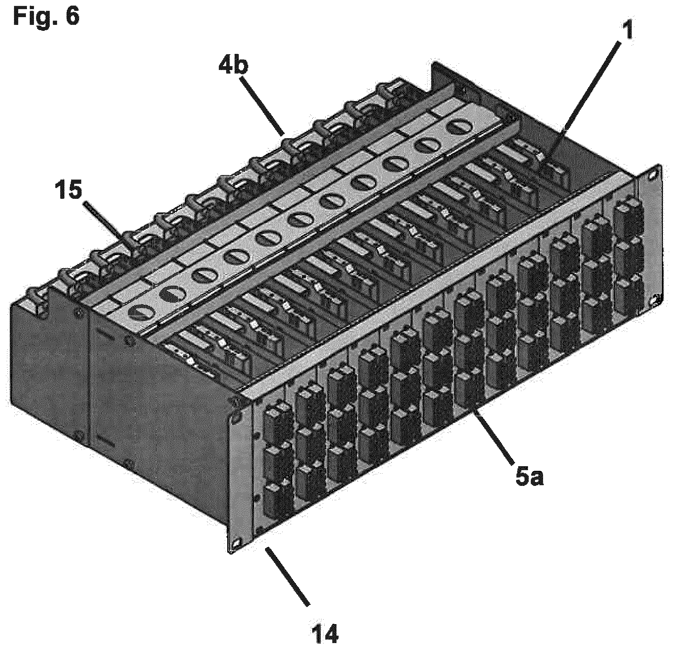

In der Figur 6 ist eine Frontansicht des voll bestücktem Baugruppenträgers 14 gezeigt mit zwölf Spleißmodulen 1. Die Befestigung der am Baugruppenträger 14 rückseitig geführten Schläuche 4b erfolgt im Dargestellten durch Drücken der Schläuche in Aufnahmen aus Metall 15. Die Spleißmodule können nach vorne entnommen werden.

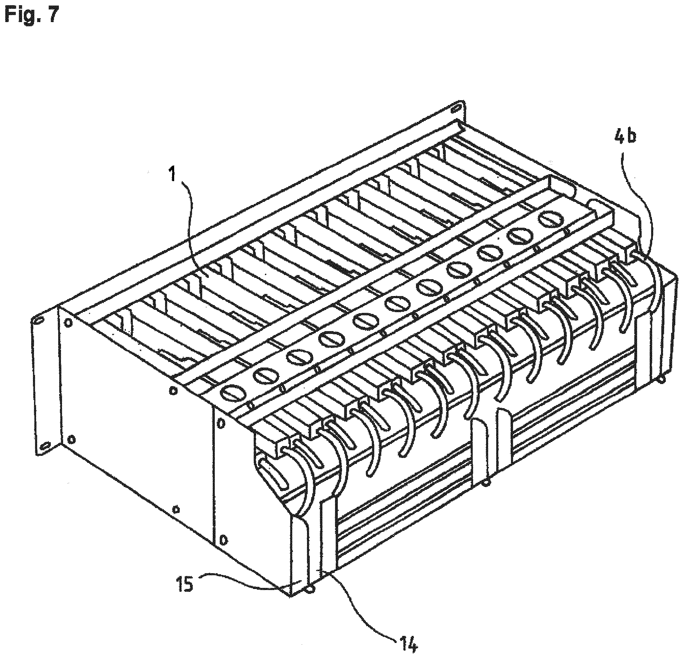

In der Figur 7 ist die Rückansicht des voll bestücktem Baugruppenträgers 14 mit zwölf Spleißmodulen 1 gezeigt. Die Befestigung der am Baugruppenträger 14 rückseitig geführten Schläuche 4b erfolgt im Dargestellten durch Drücken der Schläuche in die Aufnahmen 15 aus Metall.

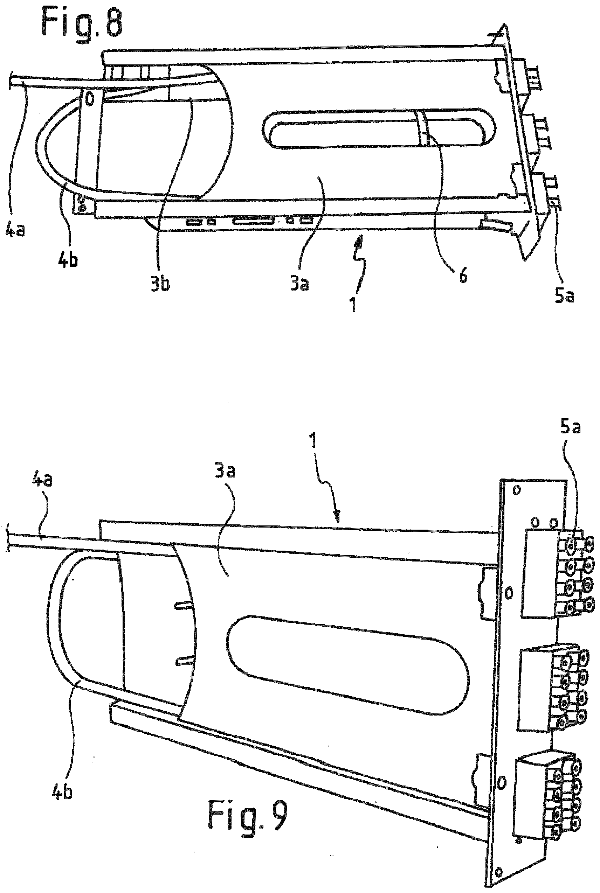

In der Figur 8 ist ein Spleißmodul 1 mit Überlängenspeicher gezeigt. Der Schlauch 6 welcher im Überlängenspeicher 3a abgelegt ist (Überlänge) ermöglicht die Entnahme des Spleißmoduls aus dem Baugruppenträger nach vorne. Während des Herausziehens des Spleißmoduls 1 aus dem Baugruppenträger wird der Schlauch 6 aus dem Überlängenspeicher 3a des Spleißmoduls abgewickelt bzw. abgerollt.

Der Miniflex®-Schutzschlauch 6 ist (unter Druck bzw. Kraft) gebogen und legt sich automatisch gerade aus, sobald der Druck bzw. die Kraft nachlässt und sich der Schutzschlauch entspannt, d.h. wenn das Spleißmodul 1 aus dem Baugruppenträger nach vorne entnommen wird (d.h. die Überlänge des Schlauchs (Kabels) 6 bzw. 4a wird aus dem Überlängenspeicher 3a entnommen). Der Pigtailader-Überlängenspeicher 3b dient zur Aufnahme der Überlängen der Pigtailadern.

In der Figur 9 ist ein Spleißmodul 1 mit Überlängenspeicher gezeigt. Der Schlauch 4b ist im Überlängenspeicher 3a abgelegt (Überlänge).

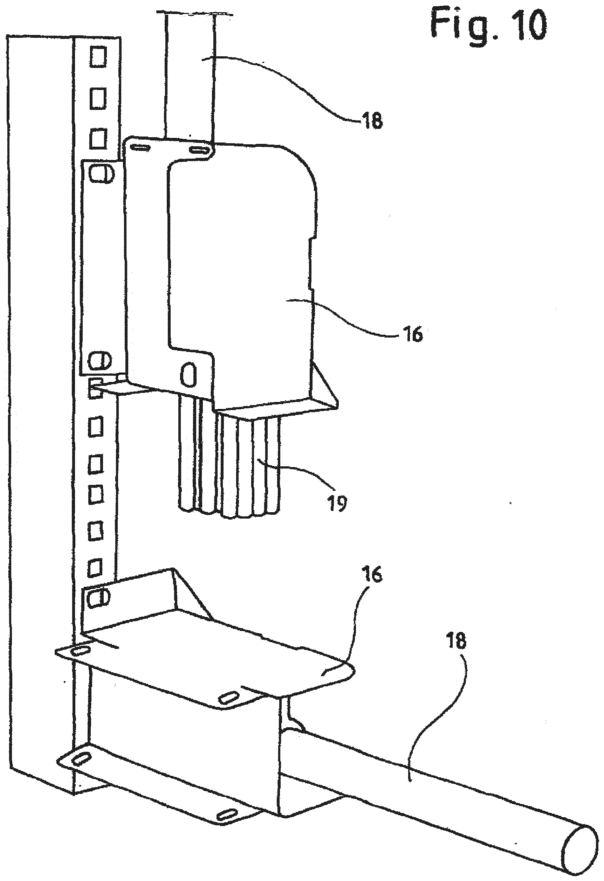

Figur 10 zeigt eine Aufteileinheit 16 (Schrägansicht), das Verlegekabel 18 welches in die Aufteileinheit 16 eingeführt wird und die Miniflex®-Schläuche 19 welche aus der Aufteileinheit 16 herausgeführt werden.

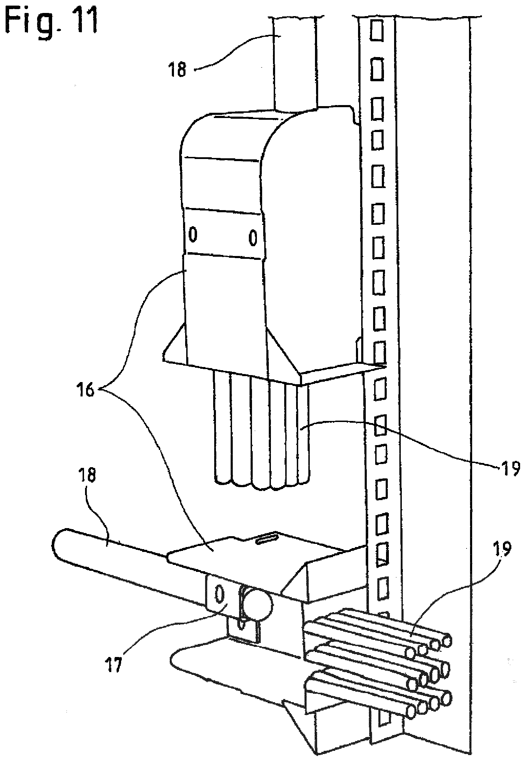

Figur 11 zeigt eine Aufteileinheit 16 (Schrägansicht). Die Kabelschelle 17 befestigt das Verlegekabel 18 welches in die Aufteileinheit 16 eingeführt wird. Die Röhrchen (in der Figur nicht gezeigt) werden in der Aufteileinheit 16 in die Miniflex®-Schläuche 19 überführt welche aus der Aufteileinheit 16 herausgeführt werden.

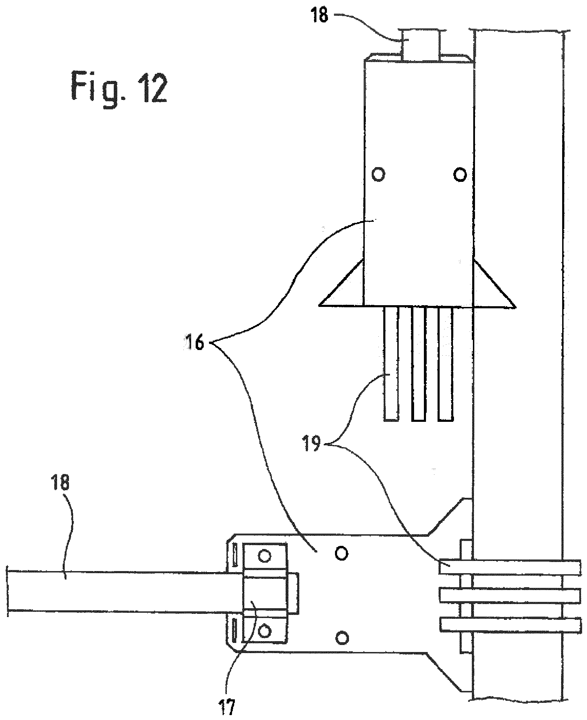

Figur 12 zeigt eine Aufteileinheit 16 (seitliche Ansicht). Die Kabelschelle 17 befestigt das Verlegekabel 18 welches in die Aufteileinheit 16 eingeführt wird. Die Röhrchen (in der Figur nicht gezeigt) werden in der Aufteileinheit 16 in die Miniflex®-Schläuche 19 überführt welche aus der Aufteileinheit 16 herausgeführt werden.

## Patentansprüche

1. Spleißmodul (1) zur Aufnahme eines Schlauchs (4a, 4b) mit definiertem Biegeradius, dessen Überlänge (6) in diesem Spleißmodul im geordneten Zustand abgelegt ist, wobei das Spleißmodul (1) eine Spleißkassette (2) und einen Pigtailader-Überlängenspeicher (3b) für die Überlänge von Pigtailadern umfasst, wobei das Spleißmodul (1)
- zur Aufnahme der Überlänge des Schlauchs (4a, 4b) in einem integrierten Überlängenspeicher (3a) des Spleißmoduls (1) konfiguriert ist und
- zur Aufnahme der Überlänge von Pigtails im Pigtailader-Überlängenspeicher (3b) des Spleißmoduls (1) konfiguriert ist, und in dem Spleißmodul (1) mit einer Tiefe (10) von 100 mm bis 500 mm, einer Breite (8) von 90 mm bis 400 mm und einer Höhe von 20 mm bis 100 mm bis zu 24x Spleiße abgelegt werden können,
und wobei das Spleißmodul (1) drei Layer besitzt, wie folgt: einen Layer für die Spleißkassette (2), einen zweiten Layer für die Überlänge der Pigtails und einen dritten Layer als besagter integrierter Überlängenspeicher (3a) für die Überlänge des zugeführten Schlauchs (4a, 4b).

2. Spleißmodul (1) nach Anspruch 1, wobei das Spleißmodul (1) zum Einsatz in einem Baugruppenträger (14) konfiguriert ist, und wobei ein Schlauch (4b) mit der Spleißkassette verbunden ist.

3. Spleißmodul (1) nach einem der vorherigen Ansprüche, wobei das Spleißmodul (1) zum Einsatz in einem Baugruppenträger (14) konfiguriert ist, und wobei
ein Schlauch (4b) mit dem Pigtailaderspeicher (3b) verbunden ist.

4. Spleißmodul (1) nach einem der vorhergehenden Ansprüche umfassend als Schlauch (4a, 4b) einen Schutzschlauch mit innenliegenden Fasern.

5. Spleißmodul (1) nach einem der vorhergehenden Ansprüche, wobei ein Schlauch (4a, 4b) in eine Aufteileinheit (16) geleitet wird.

6. Baugruppenträger (14) umfassend mehrere Spleißmodule (1) nach einem der vorherigen Ansprüche, wobei die Spleißmodule (1) nebeneinander oder übereinander oder horizontal oder vertikal angeordnet sind.

7. Baugruppenträger (14) mit der Breite 19 Zoll (482,6 mm) mit 3 Höheneinheiten geeignet zur
Aufnahme von 1, 2, 3, 4, 5, 6, 7, 8, 9, 10, 11, 12, 13, 14, 15, 16 oder 17 Spleißmodulen nach einem der Ansprüche 1-5 mit in jedem Spleißmodul integriertem
Überlängenmanagement zur Aufnahme eines Schlauchs (4a, 4b).

8. Baugruppenträger (14) nach einem der Ansprüche 6 oder 7, mit rückseitiger Fixierung (15) für Schläuche (4b).

9. Baugruppenträger (14) nach einem der Ansprüche 6 bis 8, in dem Schläuche (4b) der einzelnen Spleißmodule rückseitig arretiert und geordnet geführt werden.

10. Baugruppenträger (14) nach einem der Ansprüche 6 bis 9, mit einer Tiefe (11, 12, 13) von 200 mm bis 500 mm, einer Breite von 250 mm bis 600 mm und einer Höhe von 90 mm bis 2200 mm.

11. Baugruppenträger (14) nach einem der Ansprüche 6 bis 10 umfassend als Schlauch (4a, 4b) einen Schutzschlauch mit innenliegenden Fasern.

12. Baugruppenträger (14) nach einem der Ansprüche 6 bis 11, umfassend zusätzlich eine Aufteileinheit (16).

## Claims

1. Splice module (1) for receiving a hose (4a, 4b) with a defined bending radius, whose excess length (6) is stored in this splice module in the ordered state, in which the splice module (1) comprises a splice tray (2) and a pigtail wire excess length storage (3b) for the excess length of pigtail wires,

2. in which
the splice module (1)
- is configured for reception of the excess length of the hose (4a, 4b) in an integrated excess length storage (3a) of the splice module (1) and
- is configured for reception of the excess length of pigtails in the pigtail wire excess length storage (3b) of the splice module (1) and
in the splice module (1) with a depth (10) of 100 mm to 500 mm, a width (8) of 90 mm to 400 mm and a height of 20 mm to 100 mm up to 24x splices can be deposited, and
in which the splice module (1) has three layers, as follows: one layer for the splice tray (2), a second layer for the excess length of the pigtails and a third layer as said integrated excess length storage (3a) for the excess length of the supplied hose (4a, 4b).
2. Splice module (1) according to claim 1, in which the splice module (1) is configured for use in a subrack (14) and in which a hose (4b) is connected with the splice tray.

3. Splice module (1) according to one of the preceding claims, in which the splice module (1) is configured for use in a subrack (14), and in which a hose (4b) is connected with the pigtail wire storage (3b).

4. Splice module (1) according to one of the preceding claims, comprising as hose (4a, 4b) a protective hose with internal fibers.

5. Splice module (1) according to one of the preceding claims, in which a hose (4a, 4b) is led into an allocation unit (16).

6. Subrack (14) comprising several splice modules (1) according to one of the preceding claims, in which the splice modules (1) are arranged next to each other or one above the other or horizontally or vertically.

7. Subrack (14) having a width of 19 inches (482,6 mm) with 3 height units suitable for the reception of 1, 2, 3, 4, 5, 6, 7, 8, 9, 10, 11, 12, 13, 14, 15, 16 or 17 splice modules according to one of claims 1-5 with integrated excess length management for reception of a hose (4a, 4b) in each splice module.

8. Subrack (14) according to one of claims 6 or 7, with rear fixation (15) for hoses (4b).

9. Subrack (14) according to one of claims 6 to 8, in which hoses (4b) of the individual splice modules are locked on the rear side and are led in an orderly manner.

10. Subrack (14) according to one of claims 6 to 9, having a depth (11,12,13) of 200 mm to 500 mm, a width of 250 mm to 600 mm and a height of 90 mm to 2200 mm.

11. Subrack (14) according to one of claims 6 to 10 comprising as hose (4a, 4b) a protective hose with internal fibers.

12. Subrack (14) according to one of claims 6 to 11, additionally comprising a dividing unit (16).

## Revendications

1. Module d'épissure (1) destiné à recevoir un tuyau (4a, 4b) à rayon de courbure prédéfini, dont la longueur excédentaire (6) est stockée dans ledit module d'épissure dans l'état ordonné, avec le module d'épissure (1) comprenant une cassette d'épissure (2) et un stockage de longueur excédentaire de fil de pigtail (3b) pour la longueur excédentaire des fils de pigtail,
avec le module d'épissure (1)
- étant configuré pour recevoir la longueur excédentaire du tuyau (4a, 4b) dans un stockage de longueur excédentaire intégré (3a) du module d'épissure (1) et
- étant configuré pour recevoir la longueur excédentaire des pigtails dans le tockage de longueur excédentaire de fil de pigtail (3b) du module d'épissure(1),
et avec jusqu'à 24x épissures pouvant être déposées dans le module d'épissure (1) avec une profondeur (10) de 100 mm à 500 mm, une largeur (8) de 90 mm à 400 mm et une hauteur de 20 mm à 100 mm
et
avec le module d'épissure (1) comprenant trois couches comme suivant: une couche pour la cassette d'épissure (2), une seconde couche pour la longueur excédentaire des pigtails et une troisième couche comme ledit stockage de longueur excédentaire intégré (3a) pour la longueur excédentaire du tuyau introduit (4a, 4b).

2. Module d'épissure (1) selon la revendication 1, avec le module d'épissure (1) étant configuré pour l'utilisation dans un subrack (14) et un tuyau (4b) étant connecté avec la cassette d'épissure.

3. Module d'épissure (1) selon l'une des revendications précédentes, avec le module d'épissure (1) étant configuré pour l'utilisation dans un subrack (14) et un tuyau (4b) étant connecté avec le stockage de fil de pigtail (3b).

4. Module d'épissure (1) selon l'une des revendications précédentes, comprenant comme tuyau (4a, 4b) un tuyau protectif avec des fibres internes.

5. Module d'épissure (1) selon l'une des revendications précédentes, avec un tuyau (4a, 4b) étant conduit dans une unité de répartition (16).

6. Subrack (14) comprenant plusieurs modules d'épissure (1) selon l'une des revendications précédentes, avec les modules d'épissures (1) étant disposés côte à côte ou l'un sur l'autre ou horizontalement ou verticalement.

7. Subrack (14) avec une largeur de 19 pouces (482,6 mm) avec 3 unités de hauteur apte à accueillir 1, 2, 3, 4, 5, 6, 7, 8, 9, 10, 11, 12, 13, 14, 15, 16 ou 17 des modules d'épissures selon l'une des revendications 1-5 avec gestion de longueur excédentaire intégrée dans chaque module d'épissure pour recevoir un tuyau (4a, 4b).

8. Subrack (14) selon l'une des revendications 6 ou 7, avec fixation arrière (15) pour des tuyaux (4b).

9. Subrack (14) selon l'une des revendications 6 à 8, dans lequel des tuyaux (4b) des modules d'épissure individuels sont arrêtés á l'arrière et guidés de manière ordonée.

10. Subrack (14) selon l'une des revendications 6 à 9, avec une profondeur (11, 12, 13) de 200 mm à 500 mm, une largeur de 250 mm à 600 mm et une hauteur de 90 mm à 2200 mm.

11. Subrack (14) selon l'une des revendications 6 à 10, comprenant comme tuyau (4a, 4b) un tuyau protectif avec des fibres internes.

12. Subrack (14) selon l'une des revendications 6 à 11, comprenant en plus une unité de division (16).
